# FASCICULE DE BREVET EUROPEEN

(11) **EP 3 267 006 B1**
(45) Date de publication et mention de la délivrance du brevet: **13.03.2019**
(21) Numéro de dépôt: 17175912.9
(22) Date de dépôt: 14.06.2017
(51) Int. Cl.: F01N 13/18, F01D 9/02, F02B 37/00, F01N 3/10, F01N 3/021, F01N 13/10

(54) **CIRCUIT D'ÉCHAPPEMENT COMPORTANT UNE TURBINE ET UN DISPOSITIF DE TRAITEMENT DES GAZ D'ÉCHAPPEMENT FORMANT UN MODULE RIGIDE**
ABGASTRAKT DER EINE TURBINE UND EINE ABGASAUFBEREITUNGSVORRICHTUNG UMFASST, DIE EIN STARRES MODUL BILDEN
EXHAUST CIRCUIT COMPRISING A TURBINE AND A DEVICE FOR TREATING EXHAUST GASES FORMING A RIGID MODULE

(30) Priorité: 04.07.2016 FR 1656361
(43) Date de publication de la demande: 10.01.2018
(73) Titulaire: Renault s.a.s, 92100 Boulogne-Billancourt (FR)
(72) Inventeur: MOULIN, Jean-François, 92800 PUTEAUX (FR)

(56) Documents cités:
- EP-A1- 1 574 681
- DE-A1- 19 503 748
- DE-A1-102009 038 841
- FR-A1- 2 924 467
- US-A1- 2012 312 011

## Description

### DOMAINE TECHNIQUE DE L'INVENTION

L'invention concerne un circuit d'échappement de véhicule automobile comportant au moins une turbine et un dispositif de traitement des gaz d'échappement agencé en aval de la turbine.

L'invention concerne plus particulièrement un circuit d'échappement de véhicule automobile comportant :
- une turbine qui comporte un carter externe réalisé en tôle métallique comportant un orifice d'entrée des gaz d'échappement et un orifice de sortie des gaz d'échappement ;
- un dispositif de traitement des gaz d'échappement comportant au moins une enveloppe en tôle métallique qui renferme des organes de traitement des gaz d'échappement et qui comporte un conduit d'entrée des gaz d'échappement raccordé à l'orifice de sortie du carter de turbine.

### ARRIERE PLAN TECHNIQUE DE L'INVENTION

De manière connue, les circuits d'échappement des véhicules automobiles comportent des dispositifs de traitement des gaz d'échappement pour limiter l'émission de substances polluantes.

Certains dispositifs de traitement des gaz d'échappement ne deviennent opérationnels qu'après avoir été chauffés à une température de fonctionnement. Il s'agit par exemple de dispositifs comportant un catalyseur d'oxydation ou de réduction tels que les filtres à particules catalysés, les pièges à oxydes d'azote ou encore les dispositifs de réduction catalytique sélective.

Un tel chauffage est généralement réalisé par contact avec les gaz d'échappement chauds. La température est ainsi atteinte un certain temps après le démarrage du véhicule. Or, de nouvelles normes plus exigeantes imposent que ces dispositifs de traitement des gaz d'échappement soient opérationnels très rapidement.

On a donc proposé de changer le matériau constituant certains éléments du circuit d'échappement, par exemple la fonte, par un matériau présentant une inertie thermique beaucoup plus faible, par exemple la tôle mince. Ainsi, la montée en température des éléments du circuit d'échappement, et plus particulièrement celle des dispositifs de traitement des gaz d'échappement, se trouve accélérée.

Par ailleurs, ces circuits d'échappement équipés de nombreux accessoires de dépollution sont très encombrants. Il devient donc nécessaire de réduire l'encombrement de certains éléments pour permettre leur intégration dans l'architecture du véhicule.

### BREF RESUME DE L'INVENTION

L'invention propose un circuit d'échappement du type décrit précédemment, le raccord entre le carter et l'enveloppe étant réalisé par fixation indémontable de la tôle métallique formant pourtour de l'orifice de sortie du carter de turbine directement contre la tôle métallique formant le conduit d'entrée de l'enveloppe, le circuit d'échappement étant caractérisé en ce que l'enveloppe est entièrement portée par le carter de la turbine uniquement par l'intermédiaire du raccord avec le pourtour en tôle métallique de l'orifice de sortie du carter de turbine ; Selon d'autres caractéristiques de l'invention:
- le raccord est réalisé par soudage de la tôle métallique formant pourtour de l'orifice de sortie du carter de turbine directement contre la tôle métallique formant le conduit d'entrée de l'enveloppe ;
- l'enveloppe est réalisée venue de matière en une seule pièce avec le pourtour de l'orifice de sortie du carter de turbine ;
- le dispositif de traitement est supporté par un dispositif de support du carter de turbine ;
- le circuit d'échappement comporte un collecteur d'échappement qui est réalisé en tôle métallique et qui comporte un conduit de sortie des gaz d'échappement raccordé à l'orifice d'entrée des gaz d'échappement du carter de turbine, le raccord étant réalisé par fixation indémontable de la tôle métallique formant pourtour de l'orifice d'entrée des gaz d'échappement du carter de turbine directement avec la tôle métallique formant conduit de sortie des gaz d'échappement du collecteur ;
- le raccord du collecteur avec la turbine est réalisé par soudage de la tôle métallique formant pourtour de l'orifice d'entrée des gaz d'échappement du carter de turbine directement contre la tôle métallique formant conduit de sortie des gaz d'échappement du collecteur ;
- le dispositif de traitement des gaz d'échappement comporte un filtre à particules qui est enfermé dans l'enveloppe ;
- le dispositif de traitement des gaz d'échappement comporte un catalyseur d'oxydation qui est enfermé dans l'enveloppe ;
- la turbine appartient à un turbocompresseur ;
- la turbine et l'enveloppe sont équipées d'un écran thermique commun réalisé en une seule pièce.

L'invention concerne aussi un procédé de fabrication du circuit réalisé selon les enseignements de l'invention, caractérisé en ce que l'enveloppe du dispositif de traitement des gaz d'échappement est raccordée au carter de turbine préalablement au positionnement de la turbine et de l'enveloppe dans le véhicule automobile.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une représentation schématique d'un circuit d'échappement de véhicule réalisé selon les enseignements de l'invention ;
- la figure 2 est une vue de côté du circuit d'échappement de la figure 1 ;
- la figure 3 est une vue en coupe longitudinale selon le plan de coupe 3-3 de la figure 7 qui représente un carter de turbine raccordé à une enveloppe d'un dispositif de traitement des gaz d'échappement selon un premier mode de réalisation de l'invention ;
- la figure 4 est une vue schématique similaire à celle de la figure 3 qui représente le carter et l'enveloppe de la figure 3 raccordés selon un deuxième mode de réalisation de l'invention ;
- la figure 5 est une vue similaire à celle de la figure 4 qui représente une première variante du deuxième mode de réalisation de l'invention ;
- la figure 6 est une vue similaire à celle de la figure 4 qui représente une deuxième variante du deuxième mode de réalisation de l'invention ;
- la figure 7 est une vue de face qui représente un collecteur du circuit d'échappement raccordé à la turbine, le collecteur et la turbine étant fixées à un bloc-moteur ;
- la figure 8 est une vue en coupe selon le plan de coupe 8-8 de la figure 7 qui représente le raccord entre le collecteur et le carter de turbine.

### DESCRIPTION DETAILLEE DES FIGURES

Dans la suite de la description, on adoptera à titre non limitatif des orientations longitudinale, verticale et transversale. L'orientation verticale est utilisée à titre de repère géométrique sans rapport avec la direction de la gravité.

On adoptera en outre les termes "amont" et "aval" selon le sens d'écoulement des gaz d'échappement dans le circuit d'échappement.

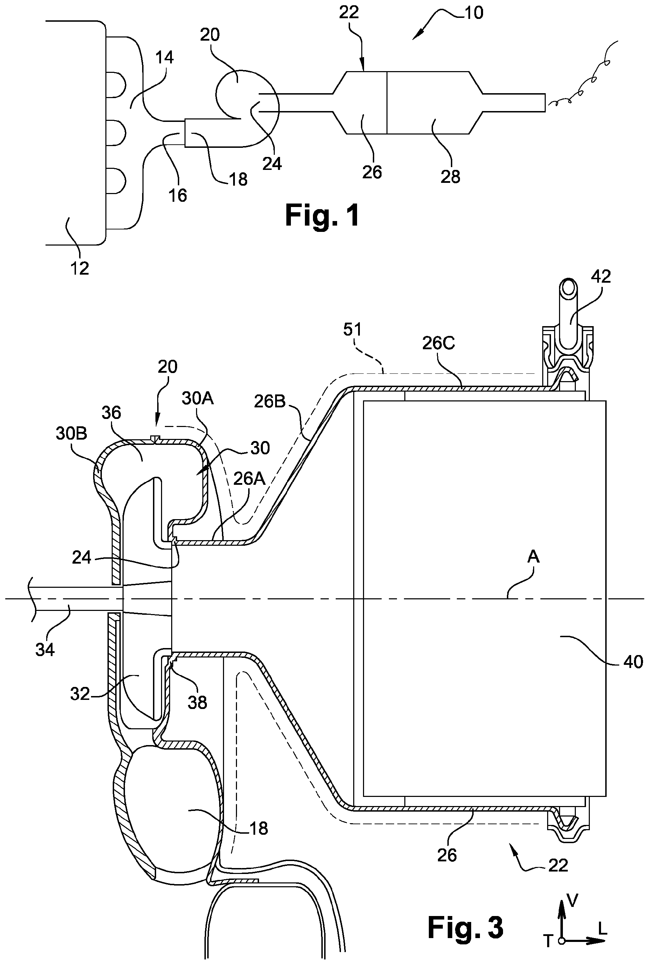

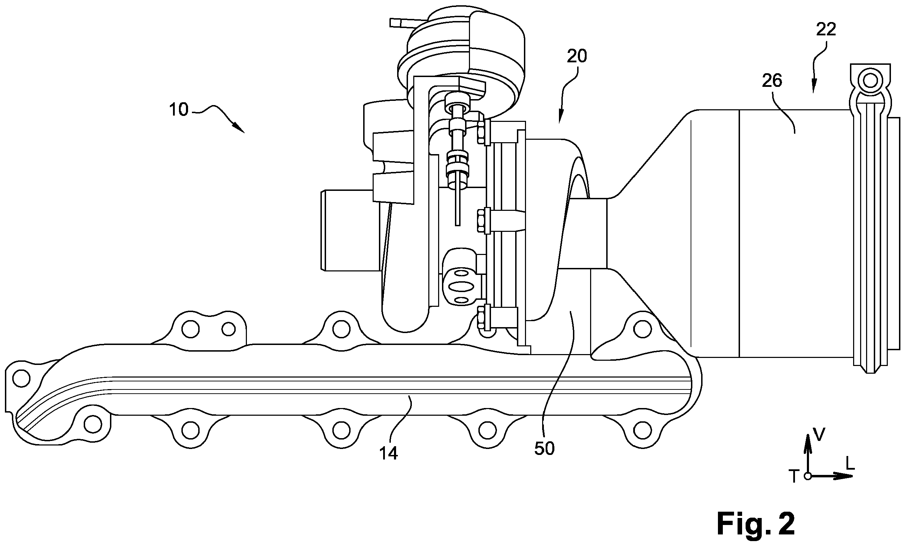

On a représenté très schématiquement aux figures 1 et 2 un circuit 10 d'échappement de véhicule automobile qui permet d'évacuer les gaz d'échappement produits dans des chambres de combustion (non représentées) d'un moteur thermique comportant un bloc-moteur 12. Il s'agit par exemple d'un moteur Diesel.

Un tel circuit 10 d'échappement comporte d'amont en aval un collecteur 14 d'échappement qui permet de faire converger les gaz d'échappement expulsés par plusieurs orifices d'échappement du bloc-moteur 12 vers un orifice 16 commun de sortie.

L'orifice 16 de sortie du collecteur 14 d'échappement est raccordé à un orifice 18 d'entrée d'une turbine 20. Il s'agit ici d'une turbine 20 appartenant à un turbocompresseur. L'énergie des gaz d'échappement est ainsi utilisée pour comprimer de l'air d'admission du bloc-moteur 12. Une telle turbine 20 comporte une roue de turbine qui est enfermée dans un carter, comme cela sera détaillé par la suite.

Après leur passage dans la turbine 20, les gaz d'échappement sont évacués vers un dispositif 22 de traitement des gaz d'échappement qui est raccordé à un orifice 24 de sortie de la turbine 20.

Le dispositif 22 de traitement des gaz d'échappement comporte au moins un organe de traitement tel qu'un filtre à particules et/ou un catalyseur d'oxydation.

Les différents organes de traitement sont ici enfermés dans des enveloppes individuelles 26, 28 raccordées en séries.

Après traitement, les gaz d'échappement sont ensuite évacués vers l'atmosphère.

Comme représenté à la figure 3, la turbine 20 comporte un carter 30 externe réalisé en tôle métallique comportant l'orifice 18 d'entrée des gaz d'échappement et l'orifice 24 de sortie des gaz d'échappement. Le carter 30 renferme une roue 32 de turbine. Cette dernière est reliée à une roue de compresseur (non représentée) par un arbre rotatif 34 de turbocompresseur d'axe "A" longitudinal.

La roue 32 de turbine est destinée à être entraînée en rotation par le passage des gaz d'échappement qui sont guidés depuis l'orifice 18 d'entrée par une volute 36 périphérique. A cet effet, le carter 30 présente une forme de galette d'axe longitudinal "A". L'orifice 18 d'entrée est agencé circonférentiellement en périphérie du carter 30, tandis que l'orifice de sortie débouche longitudinalement le long de l'axe "A".

Le carter 30 est ici formé par deux demi-coquilles 30A, 30B de tôle métallique fixées l'une à l'autre. Les deux demi-coquilles 30A, 30B sont jointes en un plan orthogonal à l'axe "A" de l'arbre qui coupe en deux la volute 36 dans le sens d'écoulement des gaz d'échappement. L'orifice 18 d'entrée des gaz d'échappement est ainsi délimité par l'assemblage des deux demi-coquilles 30A, 30B. La demi-coquille 30A aval comporte l'orifice 24 de sortie des gaz d'échappement qui est agencé coaxialement à l'arbre 34 du turbocompresseur. L'orifice 24 de sortie des gaz d'échappement est ainsi délimité par un pourtour 38 réalisé dans la tôle métallique formant la demi-coquille 30A aval.

Le dispositif 22 de traitement des gaz d'échappement comporte au moins une enveloppe 26 externe amont en tôle métallique. L'enveloppe 26 est réalisée entièrement en tôle métallique. L'enveloppe 26 est par exemple réalisée en une seule pièce de tôle métallique. L'enveloppe 26 amont forme un conduit de gaz d'échappement raccordé à l'orifice 24 de sortie de gaz d'échappement du carter 30 de turbine. L'enveloppe 26 s'étend ici longitudinalement dans le prolongement de l'orifice 24 de sortie du carter 30.

L'enveloppe 26 amont referme un organe 40 de traitement des gaz d'échappement. Il s'agit ici d'un monolithe enduit de substances catalytiques, par exemple un catalyseur d'oxydation.

En variante non représentée, l'organe de traitement est un filtre à particules, catalysé ou non catalysé.

L'enveloppe 26 comporte d'amont en aval un conduit 26A d'entrée des gaz d'échappement, un divergent 26B intermédiaire qui relie le conduit 26A d'entrée avec un corps 26C cylindrique tubulaire de plus grande section que le conduit 26A d'entrée et qui renferme l'organe 40 de traitement.

L'extrémité aval du corps 26C est destinée à être raccordée à une deuxième enveloppe 28 au moyen d'un collier 42 de serrage, couramment appelé "V-band", qui permet de réaliser un raccord étanche entre la première enveloppe 26 et la deuxième enveloppe 28. Toutefois un tel collier de serrage ne permet pas de fournir une fixation suffisamment rigide pour que les deux enveloppes 26, 28 soient rigidement fixées l'une à l'autre. Ainsi, chaque enveloppe 26, 28 doit être portée par un moyen de fixation associé au châssis du véhicule.

Le raccord entre le carter 30 de turbine et l'enveloppe 26 est réalisé par fixation indémontable de la tôle métallique formant pourtour 38 de l'orifice 24 de sortie du carter 30 de turbine directement avec la tôle métallique formant le conduit 26A d'entrée de l'enveloppe 26 externe. La fixation est suffisamment rigide pour que l'enveloppe 26 soit entièrement portée par le carter 30 de la turbine uniquement par l'intermédiaire du raccord avec le pourtour 38 en tôle métallique de l'orifice 24 de sortie du carter 30 de turbine.

Selon un premier mode de réalisation de l'invention représenté à la figure 3, l'enveloppe 26 est réalisée venue de matière en une seule pièce avec le pourtour 38 de l'orifice 24 de sortie du carter 30 de turbine. Ainsi, la demi-coquille 30A aval du carter 30 est ici formée venue de matière en une seule pièce avec l'enveloppe 26.

De cette manière le carter 30 et l'enveloppe 26 forment un ensemble solidaire rigide. Le poids de l'enveloppe 26 est ainsi entièrement supporté par le carter 30.

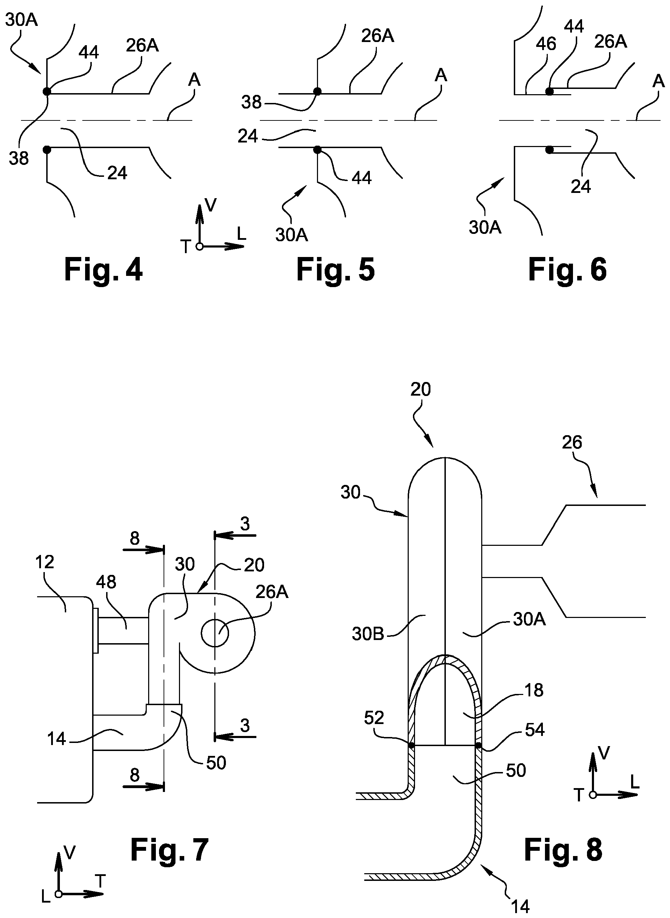

Selon un deuxième mode de réalisation de l'invention qui est représenté aux figures 4 à 6, le raccord entre l'enveloppe 26 et le carter 30 est réalisé par soudage de la tôle métallique formant pourtour 38 de l'orifice 24 de sortie du carter 30 de turbine directement contre la tôle métallique formant le conduit 26A d'entrée de l'enveloppe 26 externe. La zone annulaire de soudure est indiquée par la référence 44.

Le soudage est réalisé par fusion de la tôle métallique formant le carter 30 avec la tôle métallique formant l'enveloppe 26.

Comme représenté à la figure 4, l'extrémité libre du conduit 26A d'entrée de l'enveloppe présente les mêmes dimensions que le pourtour 8 de l'orifice 24 de sortie du carter 30. Ladite extrémité libre est ainsi abouchée bord à bord avec le pourtour 38. Le soudage est réalisé bord à bord.

Selon une première variante du deuxième mode de réalisation représentée à la figure 5, le conduit 26A d'entrée de l'enveloppe présente un diamètre extérieur légèrement inférieur au diamètre intérieur de l'orifice 24 de sortie du carter 30. Le conduit 26A d'entrée est ainsi inséré axialement dans l'orifice 34 de sortie de manière que le pourtour 38 soit en contact avec la face externe du conduit 26A d'entrée. Le soudage est ainsi effectué entre le pourtour 38 et la face externe du conduit 26A d'entrée.

Selon une deuxième variante du deuxième mode de réalisation représentée à la figure 6, l'orifice 24 de sortie du carter 30 est agencé à l'extrémité libre d'une conduite 46 axiale de sortie du carter 30. La conduite 46 de sortie est réalisée venue de matière en une seule pièce avec la demi-coquille 30A aval. La conduite 46 de sortie du carter 30 présente ici un diamètre inférieur à celui du conduit 26A d'entrée des gaz dans l'enveloppe 26. La conduite 46 de sortie est insérée dans le conduit 26A d'entrée. Puis la paroi en tôle métallique de la conduite 46 d'entrée est soudée contre la paroi en tôle métallique du conduit 26A d'entrée.

Quelle que soit la variante retenue pour ce deuxième mode de réalisation, l'opération de raccordement de l'enveloppe 26 avec le carter 30 de turbine est réalisée préalablement au positionnement de la turbine 20 et de l'enveloppe 26 dans le véhicule automobile. La fixation par soudage ou la réalisation en une pièce d'une demi-coquille 30A du carter 30A et de l'enveloppe 26 permet en effet d'obtenir un module rigide comportant la turbine 20 et l'enveloppe 26. Ce module peut être installé en une seule opération dans le circuit 10 d'échappement du véhicule.

Contrairement à une fixation par collier de serrage qui n'est pas suffisamment solide pour empêcher une désolidarisation de l'enveloppe 26 et du carter 30 en cas de manipulation du module, la fixation par soudage ou la réalisation en une pièce est suffisamment résistante pour permettre la manipulation et le transport du module sans risque de démontage.

De plus, un tel module permet d'obtenir un circuit 10 d'échappement plus compact. En effet, le module comportant l'enveloppe 26 renfermant l'organe 40 de traitement et la turbine 20 est supporté par un unique dispositif 48 de support monté sur le carter 30 de turbine, comme cela est illustré à la figure 7. Le dispositif 48 de support est par exemple une patte de fixation qui est fixée d'une part au carter 30 de turbine et d'autre part à une paroi du bloc-moteur 12. Ainsi, il est possible de faire l'économie d'un support dédié à l'enveloppe 26.

La turbine 20 et l'enveloppe 26 formant un module rigide peuvent être équipées d'un écran 51 thermique commun réalisé en une seule pièce comme cela est représenté en traits interrompus à la figure 3. Un tel écran est par exemple réalisé en une peau de tôle métallique qui entoure le carter 30 de turbine et l'enveloppe 26 avec interposition d'une couche d'air entre l'écran 51, d'une part, et le carter 30 et l'enveloppe 26, d'autre part. Ceci permet d'éviter que la chaleur des gaz d'échappement ne rayonne vers des éléments du véhicule sensibles à la chaleur qui sont agencés à proximité du circuit 10 d'échappement.

Selon un troisième mode de réalisation de l'invention qui peut être combiné avec les deux premiers modes de réalisation, le collecteur 14 d'échappement est fixé de manière indémontable avec le carter 30 de turbine. L'ensemble formé par le collecteur 14, la turbine 20 et l'enveloppe 26 forme ainsi un module rigide indémontable.

Le collecteur 14 d'échappement est aussi réalisé entièrement en tôle métallique. Il comporte un conduit 50 de sortie des gaz d'échappement raccordé à l'orifice 18 d'entrée des gaz d'échappement du carter 30 de turbine.

Le raccord est réalisé par fixation indémontable de la tôle métallique formant pourtour 52 de l'orifice 18 d'entrée des gaz d'échappement du carter 30 de turbine directement avec la tôle métallique formant conduit 50 de sortie des gaz d'échappement du collecteur 14. La zone de soudage est indiquée par la référence 54.

Le raccord du collecteur 14 avec le carter 30 de turbine est réalisé par soudage de la tôle métallique formant pourtour 52 de l'orifice 18 d'entrée des gaz d'échappement du carter 30 de turbine directement contre la tôle métallique formant conduit 50 de sortie des gaz d'échappement.

## Revendications

1. Circuit (10) d'échappement de véhicule automobile comportant :
- une turbine (20) qui comporte un carter (30) externe réalisé en tôle métallique comportant un orifice (18) d'entrée des gaz d'échappement et un orifice (24) de sortie des gaz d'échappement ;
- un dispositif (22) de traitement des gaz d'échappement comportant au moins une enveloppe (26) en tôle métallique qui renferme des organes (40) de traitement des gaz d'échappement et qui comporte un conduit (26A) d'entrée des gaz d'échappement raccordé à l'orifice (24) de sortie du carter (30) de turbine ;
- le raccord entre le carter (30) et l'enveloppe (26) étant réalisé par fixation indémontable de la tôle métallique formant pourtour (38) de l'orifice (24) de sortie du carter (30) de turbine directement contre la tôle métallique formant le conduit (26A) d'entrée de l'enveloppe (26),
**caractérisé en ce que** l'enveloppe (26) est entièrement portée par le carter (30) de la turbine (20) uniquement par l'intermédiaire du raccord avec le pourtour (38) en tôle métallique de l'orifice (24) de sortie du carter (30) de turbine.

2. Circuit (10) selon la revendication précédente, **caractérisé en ce que** le raccord est réalisé par soudage de la tôle métallique formant pourtour (38) de l'orifice (24) de sortie du carter (30) de turbine directement contre la tôle métallique formant le conduit (26A) d'entrée de l'enveloppe (26).

3. Circuit (10) selon la revendication 1, **caractérisé en ce que** l'enveloppe (26) est réalisée venue de matière en une seule pièce avec le pourtour (38) de l'orifice (24) de sortie du carter (30) de turbine.

4. Circuit (10) selon l'une quelconque des revendications 1 à 3, **caractérisé en ce que** le dispositif (22) de traitement est supporté par un dispositif (46) de support du carter (30) de turbine.

5. Circuit (10) selon l'une quelconque des revendications précédentes, **caractérisé en ce qu'**il comporte un collecteur (14) d'échappement qui est réalisé en tôle métallique et qui comporte un conduit (50) de sortie des gaz d'échappement raccordé à l'orifice (18) d'entrée des gaz d'échappement du carter (30) de turbine, le raccord étant réalisé par fixation indémontable de la tôle métallique formant pourtour (18) de l'orifice d'entrée des gaz d'échappement du carter (30) de turbine directement avec la tôle métallique formant conduit (50) de sortie des gaz d'échappement du collecteur (14).

6. Circuit (10) selon la revendication précédente, **caractérisé en ce que** le raccord du collecteur (14) avec la turbine (20) est réalisé par soudage de la tôle métallique formant pourtour de l'orifice (18) d'entrée des gaz d'échappement du carter (30) de turbine directement contre la tôle métallique formant conduit (50) de sortie des gaz d'échappement du collecteur (14).

7. Circuit (10) selon l'une quelconque des revendications précédentes, **caractérisé en ce que** le dispositif (22) de traitement des gaz d'échappement comporte un filtre à particules qui est enfermé dans l'enveloppe (26).

8. Circuit (10) selon l'une quelconque des revendications précédentes, **caractérisé en ce que** le dispositif de traitement des gaz d'échappement comporte un catalyseur d'oxydation qui est enfermé dans l'enveloppe (26).

9. Circuit (10) selon l'une quelconque des revendications précédentes, **caractérisé en ce que** la turbine (20) appartient à un turbocompresseur.

10. Circuit (10) selon la revendication précédente, **caractérisé en ce que** la turbine (20) et l'enveloppe (26) sont équipées d'un écran (51) thermique commun réalisé en une seule pièce.

11. Procédé de fabrication du circuit (10) selon l'une quelconque des revendications précédentes, **caractérisé en ce que** l'enveloppe (26) du dispositif (22) de traitement des gaz d'échappement est raccordée au carter (30) de turbine préalablement au positionnement de la turbine (20) et de l'enveloppe (26) dans le véhicule automobile.

## Patentansprüche

1. Abgastrakt (10) eines Kraftfahrzeugs, welcher umfasst:
- eine Turbine (20), welche ein aus Blech hergestelltes äußeres Gehäuse (30) aufweist, das eine Abgaseintrittsöffnung (18) und eine Abgasaustrittsöffnung (24) umfasst;
- eine Abgasaufbereitungsvorrichtung (22), die wenigstens einen Mantel (26) aus Blech aufweist, welcher Organe (40) zur Abgasaufbereitung umschließt und welcher einen Abgaseintrittskanal (26A) aufweist, der an die Austrittsöffnung (24) des Turbinengehäuses (30) angeschlossen ist;
- wobei der Anschluss zwischen dem Gehäuse (30) und dem Mantel (26) durch eine unlösbare Befestigung des Bleches, das die Umrandung (38) der Austrittsöffnung (24) des Turbinengehäuses (30) bildet, direkt an dem Blech, das den Eintrittskanal (26A) des Mantels (26) bildet, hergestellt ist,
**dadurch gekennzeichnet, dass** der Mantel (26) vollständig von dem Gehäuse (30) der Turbine (20) ausschließlich über den Anschluss mit der Umrandung (38) aus Blech der Austrittsöffnung (24) des Turbinengehäuses (30) getragen wird.

2. Abgastrakt (10) nach dem vorhergehenden Anspruch, **dadurch gekennzeichnet, dass** der Anschluss durch Anschweißen des Bleches, das die Umrandung (38) der Austrittsöffnung (24) des Turbinengehäuses (30) bildet, direkt an das Blech, das den Eintrittskanal (26A) des Mantels (26) bildet, hergestellt ist.

3. Abgastrakt (10) nach Anspruch 1, **dadurch gekennzeichnet, dass** der Mantel (26) stoffschlüssig und einstückig mit der Umrandung (38) der Austrittsöffnung (24) des Turbinengehäuses (30) hergestellt ist.

4. Abgastrakt (10) nach einem der Ansprüche 1 bis 3, **dadurch gekennzeichnet, dass** die Aufbereitungsvorrichtung (22) von einer Stützvorrichtung (46) des Turbinengehäuses (30) abgestützt wird.

5. Abgastrakt (10) nach einem der vorhergehenden Ansprüche, **dadurch gekennzeichnet, dass** er einen Abgaskrümmer (14) aufweist, welcher aus Blech hergestellt ist und welcher einen Abgasaustrittskanal (50) aufweist, der an die Abgaseintrittsöffnung (18) des Turbinengehäuses (30) angeschlossen ist, wobei der Anschluss durch eine unlösbare Befestigung des Bleches, das die Umrandung (18) der Abgaseintrittsöffnung des Turbinengehäuses (30) bildet, direkt an dem Blech, das den Abgasaustrittskanal (50) des Krümmers (14) bildet, hergestellt ist.

6. Abgastrakt (10) nach dem vorhergehenden Anspruch, **dadurch gekennzeichnet, dass** der Anschluss des Krümmers (14) an die Turbine (20) durch Anschweißen des Bleches, das die Umrandung der Abgaseintrittsöffnung (18) des Turbinengehäuses (30) bildet, direkt an das Blech, das den Abgasaustrittskanal (50) des Krümmers (14) bildet, hergestellt ist.

7. Abgastrakt (10) nach einem der vorhergehenden Ansprüche, **dadurch gekennzeichnet, dass** die Abgasaufbereitungsvorrichtung (22) ein Partikelfilter umfasst, das von dem Mantel (26) umschlossen ist.

8. Abgastrakt (10) nach einem der vorhergehenden Ansprüche, **dadurch gekennzeichnet, dass** die Abgasaufbereitungsvorrichtung einen Oxidationskatalysator aufweist, der von dem Mantel (26) umschlossen ist.

9. Abgastrakt (10) nach einem der vorhergehenden Ansprüche, **dadurch gekennzeichnet, dass** die Turbine (20) zu einem Turbolader gehört.

10. Abgastrakt (10) nach dem vorhergehenden Anspruch, **dadurch gekennzeichnet, dass** die Turbine (20) und der Mantel (26) mit einem gemeinsamen Wärmeschutzschild (51) ausgestattet sind, das einstückig ausgebildet ist.

11. Verfahren zur Herstellung des Abgastraktes (10) nach einem der vorhergehenden Ansprüche, **dadurch gekennzeichnet, dass** der Mantel (26) der Abgasaufbereitungsvorrichtung (22) vor der Positionierung der Turbine (20) und des Mantels (26) in dem Kraftfahrzeug an das Turbinengehäuse (30) angeschlossen wird.

## Claims

1. Motor vehicle exhaust circuit (10) comprising:
- a turbine (20) which comprises an outer casing (30) produced in sheet metal comprising an exhaust gas inlet orifice (18) and an exhaust gas outlet orifice (24);
- an exhaust gas treatment device (22) comprising at least one sheet metal jacket (26) which encloses exhaust gas treatment members (40) and which comprises an exhaust gas inlet duct (26A) coupled to the outlet orifice (24) of the turbine casing (30) ;
- the coupling between the casing (30) and the jacket (26) being produced by permanent fixing of the sheet metal forming the perimeter (38) of the outlet orifice (24) of the turbine casing (30) directly against the sheet metal forming the inlet duct (26A) of the jacket (26),
**characterized in that** the jacket (26) is entirely borne by the casing (30) of the turbine (20) solely via the coupling with the sheet metal perimeter (38) of the outlet orifice (24) of the turbine casing (30) .

2. Circuit (10) according to the preceding claim, **characterized in that** the coupling is produced by welding the sheet metal forming the perimeter (38) of the outlet orifice (24) of the turbine casing (30) directly against the sheet metal forming the inlet duct (26A) of the jacket (26).

3. Circuit (10) according to Claim 1, **characterized in that** the jacket (26) is integrally produced in a single piece with the perimeter (38) of the outlet orifice (24) of the turbine casing (30).

4. Circuit (10) according to any one of Claims 1 to 3, **characterized in that** the treatment device (22) is supported by a support device (46) of the turbine casing (30).

5. Circuit (10) according to any of one of the preceding claims, **characterized in that** it comprises an exhaust manifold (14) which is produced in sheet metal and which comprises an exhaust gas outlet duct (50) coupled to the exhaust gas inlet orifice (18) of the turbine casing (30), the coupling being produced by permanent fixing of the sheet metal forming the perimeter (18) of the exhaust gas inlet orifice of the turbine casing (30) directly with the sheet metal forming the exhaust gas outlet duct (50) of the manifold (14).

6. Circuit (10) according to the preceding claim, **characterized in that** the coupling of the manifold (14) with the turbine (20) is produced by welding the sheet metal forming the perimeter of the exhaust gas inlet orifice (18) of the turbine casing (30) directly against the sheet metal forming the exhaust gas outlet duct (50) of the manifold (14).

7. Circuit (10) according to any of one of the preceding claims, **characterized in that** the exhaust gas treatment device (22) comprises a particulate filter which is enclosed in the jacket (26).

8. Circuit (10) according to any of one of the preceding claims, **characterized in that** the exhaust gas treatment device comprises an oxidation catalyst which is enclosed in the jacket (26).

9. Circuit (10) according to any of one of the preceding claims, **characterized in that** the turbine (20) belongs to a turbocharger.

10. Circuit (10) according to the preceding claim, **characterized in that** the turbine (20) and the jacket (26) are equipped with a common thermal screen (51) produced in a single piece.

11. Method for manufacturing the circuit (10) according to any one of the preceding claims, **characterized in that** the jacket (26) of the exhaust gas treatment device (22) is coupled to the turbine casing (30) prior to the positioning of turbine (20) and of the jacket (26) in the motor vehicle.
